# EUROPÄISCHE PATENTSCHRIFT

(11) **EP 1 398 205 B1**
(45) Veröffentlichungstag und Bekanntmachung des Hinweises auf die Patenterteilung: **13.06.2007**
(21) Anmeldenummer: 03020127.1
(22) Anmeldetag: 05.09.2003
(51) Int. Cl.: B60N 2/42

(54) **Sicherheitssitz mit Einrichtung zum automatischen Gurtan- und -ablegen**
Safety seat with apparatus for automatic fastening and removal of the belt
Siège de sécurité avec dispositif pour automatiquement poser et enlever la ceinture

(30) Priorität: 16.09.2002 DE 10243075
(43) Veröffentlichungstag der Anmeldung: 17.03.2004
(73) Patentinhaber: AUTOFLUG GMBH, D-25462 Rellingen (DE)
(72) Erfinder: Hansen, Holger, 20357 Hamburg (DE)
(74) Vertreter: Müller, Karl-Ernst

(56) Entgegenhaltungen:
- WO-A-98/10682
- DE-A- 3 306 839
- DE-A- 4 303 719
- DE-U- 20 011 338
- US-A- 3 868 143
- US-A- 4 487 383
- US-A- 6 152 401
- US-B1- 6 409 243

## Beschreibung

Die Erfindung betrifft einen Sicherheitssitz für Land-, Luft- und Seefahrzeuge mit wenigstens einem Sitzteil und einer Rückenlehne, wobei der Sicherheitssitz im Fahrzeug zwischen dessen Boden und dessen Deckenbereich mittels oberhalb und unterhalb des Sitzes vorgesehener Spanngurte befestigbar ist, und wobei der Sicherheitssitz mit einem Sicherheitsgurtzeug zur Sicherung des auf dem Sicherheitssitz sitzenden Insassen versehen ist.

Ein Sicherheitssitz mit den vorgenannten Merkmalen ist aus der DE 43 03 719 A1, welches den nächstliegenden Stand der Technik bildet, bekannt; der Sicherheitssitz ist als eine den Körper des Insassen im Rücken, aber auch seitlich umschließende und einen Einstieg aufweisende textile Hülle ausgebildet. Zur Sicherung des in dem Sicherheitssitz sitzenden Insassen ist ein den Einstieg verschließendes Sicherheitsgurtzeug vorgesehen, welches aus vier einzelnen, in einem Zentralgurtschloss zusammengeführten Sicherheitsgurten besteht.

Mit dem bekannten Sicherheitssitz ist der Nachteil verbunden, dass das Anlegen des Sicherheitsgurtzeuges aufwendig ist, da mehrere Gurte in dem Zentralgurtschloss eingehakt werden müssen. Es kommt hinzu, dass die Gurte in abgelegtem Zustand in der textilen Hülle liegen, so dass sich der Insasse beim Einstieg in den Sitz unter Umständen auf die Gurte setzt und diese dann für seine Sicherung nur sehr beschwerlich ergreifen kann. Dies ist insbesondere von Bedeutung, wenn der Sicherheitssitz in militärisch genutzten Fahrzeugen zum Einsatz kommt, weil in diesem Fall die Insassen häufig mit aufwendiger Kleidung und Ausrüstungsgegenständen befördert werden, so dass die Bewegungsfreiheit der Insassen nach dem Einstieg in den Sicherheitssitz sehr eingeschränkt ist.

Aus der US 3868143 A ist weiterhin ein Sicherheitssitz mit den eingangs genannten Merkmalen bekannt, bei welchem zwei über ein Gurtschloss. zu verbindende Beckengurtabschnitte an seitlich des Sitzes befindlichen Befestigungen verankert sind. Damit ist dieses Sicherheitsgurtzeug ebenfalls aufwendig anzulegen und anzupassen.

Der Erfindung liegt daher die Aufgabe zugrunde, einen Sicherhcitssitz mit den eingangs genannten Merkmalen zur Verfügung zu stellen, bei welchem die Bewegungsfreiheit des jeweiligen Insassen vergrößert und insbesondere das An- und das Ablegen des Sicherheitsgurtzeuges vereinfacht ist.

Die Lösung dieser Aufgabe ergibt sich aus dem Anspruch 1; vorteilhafte Ausgestaltungen und Weiterbildungen der Erfindung sind in den Unteransprüchen angegeben.

Die Erfindung sieht hierzu einen Sicherheitssitz mit den eingangs genannten Merkmalen vor, bei welchem das Sicherheitsgurtzeug aus zwei jeweils seitlich des Sitzteils befestigten und mittels eines aus Schlosskörper und Einstecklasche bestehenden Gurtschlosses miteinander zu verbindenden Beckengurten sowie aus zwei von den Beckengurten abgehenden, über die Schultern des Insassen verlaufenden Schultergurten und einem in der Verlängerung der Schultergurte unter dem Sitzteil zum Einstiegsbereich des Sitzteils geführten Aktivierungsmittel besteht, und dass zwischen den Schultergurten und den beiderseits des Sitzanstiegs verlaufenden vorderen Spanngurten jeweils ein Aufspanngurt nachgiebig angeordnet ist derart, dass bei abgelegtem Sicherheitsgurtzeug die Schultergurte unter Vorspannung in einem zu den vorderen Spanngurten parallelen Verlauf gehalten sind.

Mit der Erfindung ist der Vorteil verbunden, dass aufgrund der Ausbildung des Sicherheitsgurtzeuges mit jeweils zwei Beckengurten sowie zwei Schultergurten auf eine seitliche Abstützung wie beim Stand der Technik nicht mehr unbedingt erforderlich und der Sicherheitssitz auf eine Ausgestaltung mit einem Sitzteil und einer Rücklehne reduziert ist, wobei der Sicherheitssitz nach wie vor mit im vorderen Einstiegsbereich und im hinteren Rückenlehnenbereich jeweils oberhalb und unterhalb des Sicherheitssitzes angeordneten Spanngurten im Fahrzeug befestigt ist. Da bei abgelegtem Sicherheitsgurtzeug die Schultergurte über die Aufspanngurte in einem zu den oberen, vorderen Spanngurten des Sicherheitssitzes parallelen Verlauf und aufgrund der Verbindung der Schultergurte mit den Beckengurten auch die Beckengurte in einer seitlich zu dem Sitzteil befindlichen Ebene gehalten sind, ist der Einstiegsbereich für den Sicherheitssitz frei, und es ist ausgeschlossen, dass beim Einstieg sich der Insasse auf Teile des Sicherheitsgurtzeuges setzt. Zum Anschnallen braucht der Insasse nur die an den vorderen Spanngurten gehaltenen Teile des Gurtschlosses zu ergreifen und vor dem Körper zusammenzuführen, wodurch einerseits die Beckengurte sich bei geschlossenem Gurtschloss vor den Körper des Insassen legen und andererseits auch die mit den Beckengurten verbundenen Schultergurte sich unter Nachgeben der Aufspanngurte automatisch positionieren. Über das weiterhin vorgesehene und im Einstiegsbereich vor dem Insassen endende Aktivierungsmittel lassen sich die Schultergurte spannen.

Nach einem Ausführungsbeispiel der Erfindung ist vorgesehen, dass die Schultergurte im Bereich der Rückenlehne des Sicherheitssitzes zu einem zentralen Rückengurt zusammengefasst sind und das als Aktivierungsgurt ausgebildete Aktivierungsmittel mit dem Rückengurt verbunden ist.

Im Hinblick auf eine bessere Anpassung des Sicherheitsgurtzeuges an die Proportionen des Insassen ist nach einem Ausführungsbeispiel der Erfindung vorgesehen, dass die an den Enden der Beckengurte befestigten Schlosskörper und Einstecklasche des Gurtschlosses jeweils über einen längenveränderbaren Einstellgurt mit dem Sitzteil des Sicherheitssitzes verbunden sind; durch die Einstellung der Einstellgurte nach dem Anlegen des Sicherheitsgurtzeuges lässt sich die Lage des Gurtschlosses vor dem Körper des Insassen korrigieren und sich somit die Position der einzelnen Teile des Sicherheitsgurtzeuges an die Körperpositionen des Insassen anpassen.

Nach einer ersten Ausführungsform der Erfindung bestehen die Aufspanngurte aus einem federnd nachgiebigen Material und sind mit ihren Enden jeweils fest an Spanngurten und Schultergurten befestigt, wobei die Aufspanngurte nach einem Ausführungsbeispiel vorzugsweise aus Gummi bestehen.

Hinsichtlich der Arretierung des Aktivierungsgurtes nach dem Spannen der Schultergurte ist nach einem Ausführungsbeispiel der Erfindung vorgesehen, dass an dem Sitzteil im Einstiegsbereich eine lösbare Klemmvorrichtung zum Festlegen des Aktivierungsgurtes angeordnet ist.

Alternativ kann vorgesehen sein, dass die Aufspanngurte an den Schultergurten befestigt und über an den vorderen und hinteren Spanngurten des Sicherheitssitzes angeordnete Gurtumlenkungen bis zu einer im Bereich der Rückenlehne angeordneten automatischen Spannvorrichtung geführt sind. In gleicher Weise kann vorgesehen sein, dass die Schultergurte oder der Rückengurt an einer im Bereich der Rückenlehne angeordneten Spannvorrichtung angeschlossen sind. Insoweit bei diesem Ausführungsbeispiel der Erfindung eine automatisch arbeitende Spannvorrichtung vorgesehen ist, kann diese Spannvorrichtung als an sich bekannter, mit einer Aufwickelfeder sowie mit einer umsteuerbaren Blockiermechanik versehener Gurtaufroller ausgebildet sein.

Nach einem Ausführungsbeispiel der Erfindung ist vorgesehen, dass das Aktivierungsmittel an beiden Gurtaufrollern derart angreift, dass jeweils eine gegenläufige Drehbewegung der Gurtaufrollerwelle angesteuert wird; hierdurch ist sichergestellt, dass in dem Maße, in welchem die Schultergurte gespannt werden, die mit den Schultergurten verbundenen Aufspanngurte durch Abwickeln von dem zugeordneten Gurtaufroller verlängert werden. Hierbei kann vorgesehen sein, dass die Gurtaufroller über eine gemeinsame Welle miteinander gekoppelt sind, an der das Aktivierungsmittel angreift, wobei Mechaniken bekannt sind, die trotz einer zentralen Welle eine gegenläufige Drehbewegung innerhalb der Gurtaufroller zulassen.

Gemäß einem Ausführungsbeispiel der Erfindung ist das Aktivierungsmittel als an der zentralen Welle der Gurtaufroller angreifender Aktivierungsgurt ausgebildet, der seinerseits auf der zentralen Welle aufgewickelt sein kann.

Alternativ kann vorgesehen sein, dass ein entsprechend ausgebildetes Aktivierungsmittel an der Blockiermechanik der Gurtaufroller angreift und jeweils durch Ansteuerung der Blockiermechanik die Aufwickelbewegung bzw. die Abwickelbewegung jeweils unter der Wirkung zugeordneter Federn einleitet bzw. freigibt. Hierbei kann vorgesehen sein, dass das Aktivierungsmittel als Bowdenzug mit einem an dem Sitzteil angeordneten Schalthebel ausgebildet ist, so dass durch eine Betätigung des Schalthebels das Spannen der Schultergurte einschließlich der Freigabe der Aufspanngurte bzw. die Freigabe der Schultergurte einschließlich des Spannens der Aufspanngurte eingeleitet werden kann.

Die Erfindung ist nicht auf einen Sicherheitssitz mit Sitzteil und Rückenlehne beschränkt, vielmehr lässt sich die Erfindung auch bei einer aus der gattungsbildenden DE 43 03 719 A1 bekannten Ausbildung des Sicherheitssitzes als textile Hülle verwenden.

In der Zeichnung sind Ausführungsbeispiele der Erfindung wiedergegeben, welche nachstehend beschrieben sind. Es zeigen:
- Fig. 1: einen Sicherheitssitz mit Sicherheitsgurtzeug in einer schematischen Darstellung bei abgelegtem Sicherheitsgurtzeug,
- Fig. 2: den Sicherheitssitz mit in der Anlegestellung dargestelltem Sicherheitsgurtzeug,
- Fig. 3: den Sicherheitssitz gemäss Figur 1 in einer anderen Ausführungsform mit automatischen Spannvorrichtungen für Aufspann- und Schultergurte bei in der Ablagestellung befindlichem Sicherheitsgurtzeug,
- Fig. 4: den Gegenstand der Figur 3 mit in der Anlagestellung dargestelltem Sicherheitsgurtzeug.

Der in den Zeichnungsfiguren jeweils dargestellte Sicherheitssitz 10 besteht aus einem Sitzteil 11 und einer Rückenlehne 12, wobei an dem Sitzteil in dessen vorderem Einstiegsbereich oberhalb und unterhalb des Sitzteiles 11 vordere Spanngurte 13 und an den oberen und unteren Enden der Rückenlehne 12 jeweils hintere Spanngurte 14 angreifen, mit denen der Sicherheitssitz 10 in einem nicht weiter dargestellten Land-, Luft oder Seefahrzeug befestigbar ist.

Das zur Sicherung eines auf dem Sicherheitssitz sitzenden Insassen vorgesehene Sicherheitsgurtzeug besteht zunächst aus zwei Beckengurten **15,** die mit einem Ende seitlich des Sitzteiles 11 im Bereich des Anschlusses der Rückenlehne 12 entweder fahrzeugfest oder aber am Sitzteil selbst befestigt sind. An den freien Enden der Beckengurte 15 sind einerseits ein Schlosskörper 16 und andererseits eine Einsteckzunge 17 befestigt, wobei durch Verbinden von Einsteckzunge 17 und Schlosskörper 16 ein Gurtschloss gebildet ist, mittels dessen die Beckengurte 15 vor dem Körper des Insassen zu schließen sind.

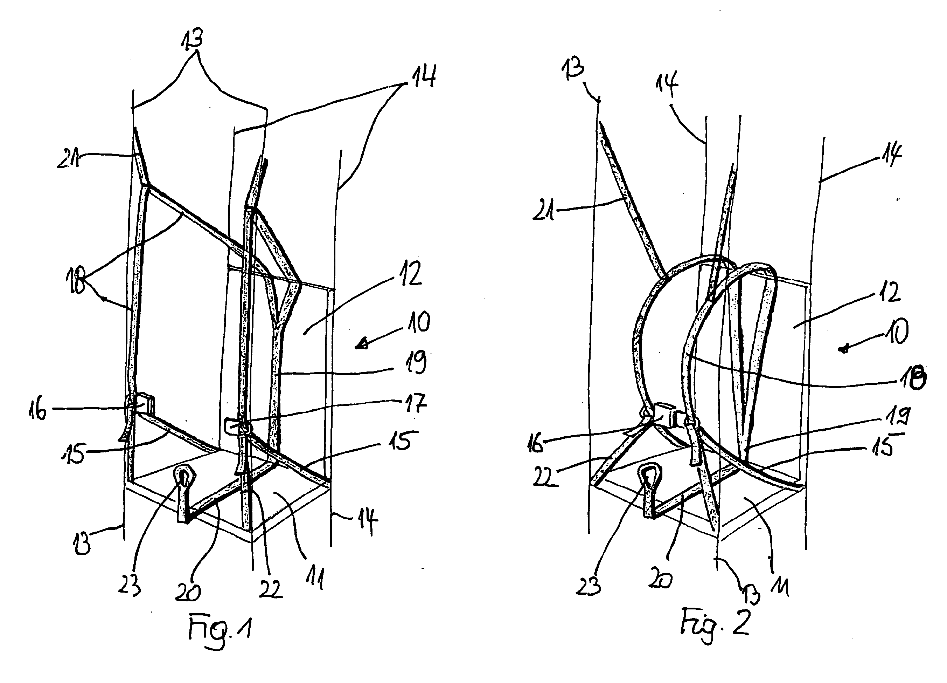

An den Beckengurten 15 bzw. am Schlosskörper 16 und Einsteckzunge 17 sind zwei Schultergurte 18 befestigt, die von ihrer Anbindung an den Beckengurten 15 aus über die Schultern des Insassen zur Rückenlehne 12 geführt sind und die Rückenlehne 12 außen umgreifen; bei dem dargestellten Ausführungsbeispiel sind die beiden Schultergurte 18 in einem gemeinsamen Rückengurt 19 zusammengefasst, der in einen unter dem Sitzteil 11 nach vorne zum Einstiegsbereich des Sicherheitssitzes 10 geführten Aktivierungsgurt 20 als Aktivierungsmittel übergeht, an dessen freiem Ende eine Handschlaufe 23 angeordnet ist. Wie im einzelnen nicht dargestellt ist im vorderen Bereich des Sitzteils 11 eine Klemmvorrichtung angeordnet, durch die der Aktivierungsgurt 20 geführt ist. Diese Klemmvorrichtung ermöglicht es, nach der Betätigung des Arretierungsgurtes 20 zum Spannen der Schultergurte 18 den Arretierungsgurt 20 festzulegen und damit die Spannung in den Schultergurten 18 aufrechtzuerhalten. Zum Lösen des Aktivierungsgurtes kann die Klemmvorrichtung entsprechend entriegelt werden. Zwischen dem jeweiligen Schultergurt 18 und dem zugeordneten seitlichen vorderen Spanngurt 13 ist jeweils ein aus einem elastischen Material, vorzugsweise Gummi, bestehender Aufspanngurt 21 angeordnet, der bei dem in den Figuren 1 und 2 dargestellten Ausführungsbeispiel mit seinen Enden jeweils fest mit den vorderen oberen Spanngurten 13 und den Schultergurten 18 verbunden ist. Weiterhin verlaufen von den Beckengurten 15 bzw. vom Schlosskörper 16 und Einsteckzunge 17 jeweils ein Einstellgurt 22 zum vorderen Einstiegsbereich des Sitzteils 11.

Wie sich aus einem Vergleich der Figuren 1 und 2 ergibt, wird zum Anlegen des Sicherheitsgurtzeuges wie folgt verfahren: Der Insasse setzt sich in den Sicherheitssitz 10 mit dem gemäss Figur 1 gehalterten Sicherheitsgurtzeug. Zum Anschnallen ergreift der Insasse die seitlich vor ihm durch die Wirkung der Aufspanngurte 21 an den vorderen Spanngurten 13 befindlichen Teile des Sicherheitsgurtschlosses, Schlosskörper 16 und Einsteckzunge 17, und schließt das Gurtschloss durch Einstecken der Einsteckzunge 17 in den Schlosskörper 16. Soweit durch diese Bewegung die Schultergurte 18 nach Innen geführt werden, steckt der Insasse die Arme durch die sich bildenden Schlaufen der **Schultergurte 18** und zieht anschließend an dem Aktivierungsgurt 20, indem der Insasse die vor ihm liegende Handschlaufe 23 ergreift. Durch diese Zugbewegung werden die Schultergurte 18 gestrafft, und zwar gegen die Wirkung der elastischen Aufspanngurte 21. Sind die Schultergurte 18 ausreichend gespannt, wird der Aktivierungsgurt 20 in der nicht weiter dargestellten Klemmvorrichtung festgelegt. Anschließend ist durch ein Strammziehen der Einstellgurte 22 die Lage des Gurtschlosses zu korrigieren. Somit ist der aus Figur 2 ersichtliche Anlegezustand des Sicherheitsgurtzeuges durch wenige Handgriffe zu bewerkstelligen.

Zum Ablegen des Sicherheitsgurtzeugs löst der Insasse den Aktivierungsgurt 20 aus der Klemmvorrichtung und entriegelt damit den Rückengurt 19 mit angeschlossenen Schultergurten 18. Anschließend öffnet der Insasse das Gurtschloss, und Beckengurte 15 wie auch Schultergurte 18 werden durch die unter Vorspannung stehenden Aufspanngurte 21 wieder in ihre Ausgangslage gemäss Figur 1 verbracht, in welcher das Sicherheitsgurtzeug für einen nächsten Anschnallvorgang bereitsteht.

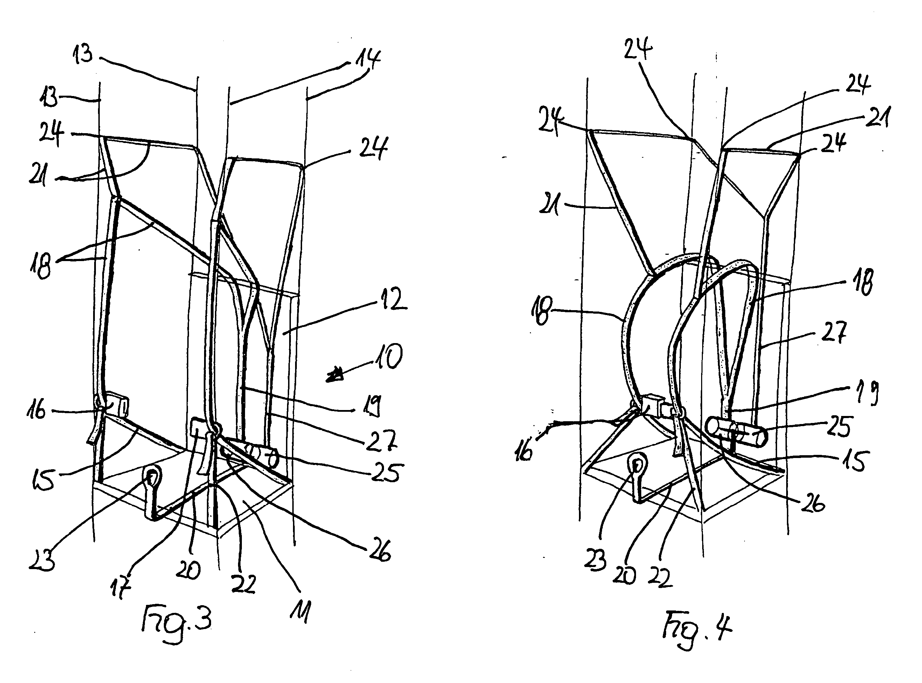

Das in den Figuren 3 und 4 dargestellte Ausführungsbeispiel unterscheidet sich von dem zuvor zu Figuren 1 und 2 dargestellten Ausführungsbeispiel dadurch, dass die an die jeweiligen Schultergurte 18 angeschlossenen Aufspanngurte 21 von ihrer Befestigung an den Schultergurten 18 über an den oberen vorderen Spanngurten 13 und den oberen hinteren Spanngurten 14 jeweils angeordnete Gurtumlenkungen 24 zu einer im Bereich der Rückenlehne 12 angeordneten Spannvorrichtung in Form eines an sich bekannten Gurtaufrollers 25 geführt sind, wobei die Aufspanngurte 21 vor Eintritt in den Gurtaufroller 25 zu einem zentralen Gurtabschnitt 27 zusammengefasst sind. In gleicher Weise ist auch der mit den Schultergurten 18 verbundene Rückengurt 19 zu einem im Rückenlehnenbereich angeordneten Gurtaufroller 26 als Spannvorrichtung geführt, so dass sowohl die Aufspanngurte 21 wie auch die Schultergurte 18 unter der Wirkung von in den Gurtaufrollern 25, 26 angeordneten Aufwickelfedern stehen, und die in Figur 3 dargestellte Ablegestellung des Sicherheitsgurtzeugs über die Rückzugswirkung der Gurtaufroller 25, 26 herbeigeführt wird, während die Anschnallbewegung bis zu dem in Figur 4 dargestellten Anlegezustand entgegen der Wirkung der Gurtaufroller 25, 26 bzw. der darin angeordneten Aufwickelfedern erfolgt. In den Gurtaufrollern 25, 26 sind in an sich bekannter Weise ansteuerbare bzw. umsteuerbare Blockiermechaniken zur Festlegung der jeweils aufgewickelten Gurtabschnitte von Rückengurt 19 und zentralem Gurtabschnitt 27 der Aufspanngurte 21 ausgebildet.

Der Anschnallvorgang vollzieht sich bei dem in den Figuren 3 und 4 dargestellten Ausführungsbeispiel in gleicher Weise wie zu Figur 1 und 2 beschrieben, wobei die Nachgiebigkeit der Aufspanngurte 21 beim Zusammenführen der Beckengurte 15 mit Schultergurten 18 durch Abwickeln des zentralen Gurtabschnitts 27 von dem zugeordneten Gurtaufroller **25** gewährleistet ist. Nach dem Anlegen der Beckengurte 15 erfolgt wiederum eine Betätigung des bei dem dargestellten Ausführungsbeispiel als Aktivierungsgurt 20 ausgeführten Aktivierungsmittels, wodurch der den Schultergurten 18 zugeordnete Gurtaufroller 26 entriegelt wird, so dass sich die Schultergurte 18 spannen. Entsprechend dem Spannen der Schultergurte lässt der den Aufspanngurten 21 zugeordnete Gurtaufroller 25 das erforderliche Maß an Gurtlänge heraus.
Zum Ablegen wird erneut der Aktivierungsgurt 20 betätigt, der die Blockiermechanik der Gurtaufroller 25, 26 dahingehend umsteuert, dass nun nach dem Lösen der Gurtschlossverbindung der Gurtaufroller 25 den zentralen Gurtabschnitt 27 einzieht und damit die Aufspanngurte 21 strafft, die dadurch die Schultergurte 18 wiederum in die Figur 3 dargestellte Ausgangslage verbringen; die hiermit erforderliche Verlängerung der Schultergurte 18 wird durch entsprechende Abwickelbewegung von dem den Schultergurten 18 zugeordneten Gurtaufroller 26 gewährleistet.

Die in der vorstehenden Beschreibung, den Patentansprüchen, der Zusammenfassung und der Zeichnung offenbarten Merkmale des Gegenstandes dieser Unterlagen können sowohl einzeln als auch in beliebigen Kombinationen untereinander für die Verwirklichung der Erfindung in ihren verschiedenen Ausführungsformen wesentlich sein.

## Patentansprüche

1. Sicherheitssitz (10) für Land-, Luft- und Seefahrzeuge mit wenigstens einem Sitzteil (11) und einer Rückenlehne (12), wobei der Sicherheitssitz (10) im Fahrzeug zwischen dessen Boden und dessen Deckenbereich mittels oberhalb und unterhalb des Sitzes vorgesehener Spanngurte befestigbar ist, und wobei der Sicherheitssitz (10) mit einem Sicherheitsgurtzeug zur Sicherung des auf dem Sicherheitssitz sitzenden Insassen versehen ist, **dadurch gekennzeichnet daß** das Sicherheitsgurtzeug aus zwei jeweils seitlich des Sitzteils (11) befestigten und mittels eines aus Schlosskörper (16) und Einstecklasche (17) bestehenden Gurtschlosses miteinander zu verbindenden Beckengurten (15) sowie aus zwei von den Beckengurten (15) abgehenden, über die Schultern des Insassen verlaufenden Schultergurten (18) und einem in der Verlängerung der Schultergurte (18) unter dem Sitzteil (11) zum Einstiegsbereich des Sitzteils (11) geführten Aktivierungsmittel (20) besteht, wobei zwischen den Schultergurten (18) und den beiderseits des Sitzeinstiegs verlaufenden vorderen Spanngurten (13) jeweils ein Aufspanngurt (21) nachgiebig angeordnet ist derart, dass bei abgelegtem Sicherheitsgurtzeug die Schultergurte (18) unter Vorspannung in einem zu den vorderen Spanngurten (13) parallelen Verlauf gehalten sind.

2. Sicherheitssitz nach Anspruch 1, **dadurch gekennzeichnet, dass** die Schultergurte (18) im Bereich der Rückenlehne (12) des Sicherheitssitzes (10) zu einem zentralen Rückengurt (19) zusammengefasst sind und das als Aktivierungsgurt (20) ausgebildete Aktivierungsmittel mit dem Rückengurt (19) verbunden ist.

3. Sicherheitssitz nach Anspruch 1 oder 2, **dadurch gekennzeichnet, dass** die an den Enden der Beckengurte (15) befestigten Schlosskörper (16) und Einstecklasche (17) des Gurtschlosses jeweils über einen längenveränderbaren Einstellgurt (22) mit dem Sitzteil (11) des Sicherheitssitzes (10) verbunden sind.

4. Sicherheitssitz nach einem der Ansprüche 1 bis 3, **dadurch gekennzeichnet, dass** die Aufspanngurte (21) aus einem federnd nachgiebigen Material bestehen und mit ihren Enden jeweils fest an Spanngurten (13) und Schultergurten (18) befestigt sind.

5. Sicherheitssitz nach Anspruch 4, **dadurch gekennzeichnet, dass** die Aufspanngurte (21) aus Gummi bestehen.

6. Sicherheitssitz nach einem der Ansprüche 2 bis 5, **dadurch gekennzeichnet, dass** an dem Sitzteil (11) in dessen Einstiegsbereich eine lösbare Klemmvorrichtung zum Festlegen des Aktivierungsgurtes (20) angeordnet ist.

7. Sicherheitssitz nach einem der Ansprüche 1 bis 3, **dadurch gekennzeichnet, dass** die Aufspanngurte (21) an den Schultergurten (18) befestigt und über an den vorderen und hinteren Spanngurten (13,14) des Sicherheitssitzes angeordnete Gurtumlenkungen (24) bis zu einer im Bereich der Rückenlehne (12) angeordneten automatischen Spannvorrichtung (25) geführt sind.

8. Sicherheitssitz nach Anspruch 7, **dadurch gekennzeichnet, dass** die Schultergurte (18) oder der Rückengurt (19) an einer im Bereich der Rückenlehne (12) angeordneten Spannvorrichtung (26) angeschlossen sind.

9. Sicherheitssitz nach Anspruch 7 oder 8, **dadurch gekennzeichnet, dass** die Spannvorrichtung als an sich bekannter, mit einer Aufwickelfeder sowie mit einer umsteuerbaren Blockiermechanik versehener Gurtaufroller (25,26) ausgebildet ist.

10. Sicherheitssitz nach Anspruch 9, **dadurch gekennzeichnet, dass** das Aktivierungsmittel (20) an beiden Gurtaufrollern (25, 26) derart angreift, dass jeweils eine gegenläufige Drehbewegung der zugehörigen Gurtaufrollerwelle angesteuert wird.

11. Sicherheitssitz nach Anspruch 10, **dadurch gekennzeichnet, dass** die Gurtaufroller (25,26) über eine gemeinsame Welle miteinander gekoppelt sind, an der das Aktivierungsmittel (20) angreift.

12. Sicherheitssitz nach Anspruch 10 oder 11, **dadurch gekennzeichnet, dass** das Aktivierungsmittel als an der Welle der der Gurtaufroller (25,26) angreifender Aktivierungsgurt (20) ausgebildet ist.

13. Sicherheitssitz nach einem der Ansprüche 9 bis 11, **dadurch gekennzeichnet, dass** das Aktivierungsmittel mit der Blockiermechanik der Gurtaufroller (25,26) verbunden ist.

14. Sicherheitssitz nach Anspruch 13, **dadurch gekennzeichnet, dass** das Aktivierungsmittel als Bowdenzug mit einem an dem Sitzteil (11) angeordneten Schalthebel ausgebildet ist.

15. Sicherheitssitz nach einem der Ansprüche 1 bis 14, **dadurch gekennzeichnet, dass** der Sicherheitssitz (10) als von den Spanngurten (13,14) aufgespannte textile Hülle ausgebildet ist.

## Claims

1. Safety seat (10), for land, air and sea vehicles, having at least one seat portion (11) and one back rest (12), wherein said safety seat (10) is adapted to be secured to a vehicle, between a floor and ceiling area thereof, by means of securement straps provided above and below the seat, said safety seat (10) further comprising a safety belt harness for securing an occupant that is sitting on said safety seat, **characterized in that** said belt harness is comprising two lap belts (15) that are each secured laterally of the seat portion (11) and can be connected to one another by a belt buckle comprising a buckle body (16) and an insertion tongue (17), further two shoulder belts (18) that extend from said lap belts (15) and are adapted to extend over shoulders of an occupant; and an activating means (20) that, as an extension of said shoulder belts (18), is guided below the seat portion to an entry region thereof, and wherein respective tensioning straps (21) are yieldingly disposed between said shoulder belts (18), and front ones of said securement straps (13) that extend on either side of the entry region, in such a way that if said safety belt harness is not strapped on, the shoulder belts (18) are held, under prestress, in an orientation that is parallel to said front securement straps (13).

2. Safety seat according to claim 1, **characterized in that** in the region of the back rest (12) of the safety seat (10) said shoulder belts (18) are joined together to form a central back belt (19), and said activating means is embodied as an activating belt (20) and is connected to the back belt (19).

3. Safety belt according to claim 1, **characterized in that** the buckle body (16) and insertion tongue (17) of said belt buckle are secured to ends of the lap belts (15) and are respectively connected to the seat portion (11) of the safety seat (10) via respective adjustment straps (22), the length of which can be altered.

4. Safety seat according to one of the claims 1 to 3, **characterized in that** the tensioning straps (21) are comprised of a resiliently yielding material, and the ends thereof are respectively fixedly secured to said front securement straps(13) and said shoulder belts (18).

5. Safety seat according to claim 4, **characterized in that** said tensioning straps (21) are made of rubber.

6. Safety seat according to one of the claims 2 to 5, **characterized in that** a releasable clamping device, which serves for fixing said activating belt (20) in position, is disposed in the entry region of the seat portion (11).

7. Safety seat according to one of the claims 1 to 3, **characterized in that** the tensioning straps (21) are secured to said shoulder belts (18), and are guided to an automatic tensioning device (25) being disposed in the region of the back rest (12) via belt deflection means (24) that are disposed on front and rear ones of said securement straps (13, 14).

8. Safety seat according to claim 7, **characterized in that** a further tensioning device (26) is disposed in the region of the back rest (12), and that the shoulder belts (18) or the back belt (19) is connected to the further tensioning device (26).

9. Safety seat according to claim 7 or claim 8, **characterized in that** the tensioning device is embodied as a known belt reel-in device (25, 26) that is provided with a winding spring and a reversible blocking mechanism.

10. Safety seat according to claim 9, **characterized in that** the activating means (20) engages both of said belt reel-in devices (25, 26) in such a way that a respective oppositely directed rotational movement of a pertaining belt reel-in shaft is initiated.

11. Safety seat according to claim 10, **characterized in that** the belt reel-in devices (25, 26) are coupled with one another via a common shaft that is engaged by said activating means (20).

12. Safety seat according to claim 10 or claim 11, **characterized in that** the activating means is an activating belt (20) that engages said shaft of the belt reel-in devices (25, 26).

13. Safety seat according to one of the claims 9 to 11, **characterized in that** the activating means is connected with the blocking mechanism of said belt reel-in devices (25, 26).

14. Safety seat according to claim 13, **characterized in that** the activating means is embodied as a Bowden cable having a switching lever that is disposed on the seat portion (11).

15. Safety seat according to one of the claims 1 to 14, **characterized in that** the safety seat (10) is embodied as a textile shell that is tensioned by said securement straps (13, 14).

## Revendications

1. Siège de sécurité (10) pour véhicules de transport terrestre, aérien et naval, comportant au moins une partie d'assise (11) et un dossier (12), le siège de sécurité (10) étant destiné à être fixé dans le véhicule entre le plancher de celui-ci et le plafond de celui-ci au moyen de sangles de précontrainte prévues au-dessus et au-dessous du siège, et le siège de sécurité (10) étant muni d'un harnais de sécurité pour assurer la sécurité de la personne assise sur le siège de sécurité (10), **caractérisé en ce que** le harnais de sécurité est formé par deux ceintures de bassin (15), fixées chacune sur un côté de la partie d'assise (11) et destinées à être reliées l'une à l'autre par une boucle de fermeture constituée d'un corps de serrure (16) et d'une patte d'enfichage (17), ainsi que par deux ceintures d'épaule (18), partant des ceintures de bassin (15) et passant sur les épaules de l'occupant du siège, et par un moyen d'activation (20), guidé dans le prolongement des ceintures d'épaule (18) en dessous de la partie d'assise (11) vers la zone d'accès à la partie d'assise (11), sachant qu'entre les ceintures d'épaule (18) et les sangles de précontrainte (13) avant situées de part et d'autre de la zone d'accès au siège, est disposée respectivement, de manière élastique, une sangle de fixation (21), de telle sorte que lorsque le harnais de sécurité n'est pas utilisé, les ceintures d'épaule (18) sont maintenues sous précontrainte dans une orientation parallèle aux sangles de précontrainte (13) avant.

2. Siège de sécurité selon la revendication 1, **caractérisé en ce que** les ceintures d'épaule (18) sont regroupées dans la zone du dossier (12) du siège de sécurité (10) pour former une ceinture dorsale (19) centrale et le moyen d'activation, réalisé sous forme de sangle d'activation (20) est relié à la ceinture dorsale (19).

3. Siège de sécurité selon la revendication 1 ou 2, **caractérisé en ce que** les corps de serrure (16) et les pattes d'enfichage (17) de la boucle de fermeture, fixées aux extrémités des ceintures de bassin (15), sont reliés chacun à la partie d'assise (11) du siège de sécurité (10), par l'intermédiaire d'une sangle de réglage (22) variable en longueur.

4. Siège de sécurité selon l'une quelconque des revendications 1 à 3, **caractérisé en ce que** les sangles de fixation (21) sont réalisées dans un matériau élastique flexible et sont fixées fermement chacune avec leurs extrémités contre les sangles de précontrainte (13) et les ceintures d'épaule (18).

5. Siège de sécurité selon la revendication 4, **caractérisé en ce que** les sangles de fixation (21) sont réalisées en caoutchouc.

6. Siège de sécurité selon l'une quelconque des revendications 2 à 5, **caractérisé en ce qu'**un dispositif de serrage amovible pour la fixation de la sangle d'activation (20) est monté sur la partie d'assise (11) dans la zone d'accès de celle-ci.

7. Siège de sécurité selon l'une quelconque des revendications 1 à 3, **caractérisé en ce que** les sangles de fixation (21) sont fixées contre les ceintures d'épaule (18) et sont guidées par l'intermédiaire de dispositifs de renvoi (24), montés sur les sangles de précontrainte (13, 14) avant et arrière du siège de sécurité, jusqu'à un dispositif de serrage (25) automatique, situé dans la zone du dossier (12).

8. Siège de sécurité selon la revendication 7, **caractérisé en ce que** les ceintures d'épaule (18) ou la ceinture dorsale (19) sont attachées à un dispositif de tension (26) situé dans la zone du dossier (12).

9. Siège de sécurité selon la revendication 7 ou 8, **caractérisé en ce que** le dispositif de tension est réalisé sous la forme d'un enrouleur de ceinture (25, 26) connu en soi, muni d'un ressort d'enroulement et d'un mécanisme de blocage réversible.

10. Siège de sécurité selon la revendication 9, **caractérisé en ce que** le moyen d'activation (20) entre en prise avec les deux enrouleurs de ceinture (25, 26), de telle sorte qu'un mouvement de rotation en sens opposé des arbres d'enroulement associés est activé dans chaque cas.

11. Siège de sécurité selon la revendication 10, **caractérisé en ce que** les enrouleurs de ceinture (25, 26) sont couplés l'un à l'autre par l'intermédiaire d'un arbre commun, sur lequel entre en prise le moyen d'activation (20).

12. Siège de sécurité selon la revendication 10 ou 11, **caractérisé en ce que** le moyen d'activation est réalisé sous forme de sangle d'activation (20) entrant en prise avec l'arbre des enrouleurs de ceinture (25, 26).

13. Siège de sécurité selon l'une quelconque des revendications 9 à 11, **caractérisé en ce que** le moyen d'activation est relié au mécanisme de blocage des enrouleurs de ceinture (25, 26).

14. Siège de sécurité selon la revendication 13, **caractérisé en ce que** le moyen d'activation est réalisé sous forme de câble sous gaine avec un levier de commande monté contre la partie d'assise (11).

15. Siège de sécurité selon l'une quelconque des revendications 1 à 14, **caractérisé en ce que** le siège de sécurité (10) est réalisé sous la forme d'une enveloppe textile déployée par les sangles de précontrainte (13, 14).
